# DEMANDE DE BREVET EUROPEEN

(11) **EP 4 414 521 A1**
(43) Date de publication de la demande: **14.08.2024**
(21) Numéro de dépôt: 24156736.1
(22) Date de dépôt: 09.02.2024
(51) Int. Cl.: E04H 4/12, C02F 1/00, C02F 103/42

(54) **SYSTÈME DE FILTRATION PERMETTANT LE RECYCLAGE DES EAUX DE LAVAGE À CONTRE-COURANT**

(30) Priorité: 09.02.2023 FR 2301218
(71) Demandeur: Miarel, 06370 Mouans-Sartoux (FR)
(72) Inventeur: PHILANDRIANOS, Alexis, 06370 Mouans-Sartoux (FR)
(74) Mandataire: Barbot, Willy

(57) **Abrégé**

La présente invention concerne un système de filtration d'eau qui comprend 1) au moins un filtre à sable (4) ; 2) au moins une cuve de décantation (10) en aval du 1) au moins un filtre à sable (4) ; 3) au moins un circuit d'acheminement d'eau (11) reliant la 2) au moins une cuve de décantation (10) au 1) au moins un filtre à sable (4) ; et 4) au moins une pompe (13) permettant le transfert de l'eau décantée entre la cuve de décantation (10) et le filtre à sable (4) ; dans lequel la 2) cuve de décantation (10) comprend en outre au moins au capteur de niveau d'eau et au moins un microcontrôleur qui sont agencés de sorte que le microcontrôleur i) coupe l'alimentation de la 4) au moins une pompe (13) permettant le transfert de l'eau décantée entre la cuve de décantation (10) et le filtre à sable (4) dès lors que le niveau d'eau dans la cuve de décantation (10) a atteint un niveau minimum et/ou
ii) allume un témoin lumineux dès lors que le niveau d'eau dans la cuve de décantation (10) a atteint un niveau maximum.

## Description

La présente demande de brevet revendique la priorité de la demande de brevet Français FR2301218 déposée en date du 9 février 2023.

### Domaine de l'invention:

L'invention appartient au domaine des piscines et, plus particulièrement, au domaine de la récupération des eaux de lavage des systèmes de filtration des piscines.

### Art antérieur :

Les piscines d'agréments nécessitent un entretien rigoureux dans le but de garantir la qualité de l'eau de baignade et, plus particulièrement, de maintenir cette eau claire, saine et sans impureté.

Il est connu de l'art antérieur des systèmes et des procédés de filtration d'eau de baignade utilisant des filtres divers, tels que les filtres à sables, les filtres à cartouches, ou encore les filtres à chaussettes, qui vont permettre de retirer de l'eau les particuMIA-B-0001-EP1-DESles qui s'y trouvent (ex : poussières, algues, etc...).

Maintenant, le fonctionnement de ces systèmes de filtration va être altéré avec le temps du fait de l'accumulation de ces particules.

Aussi, il est important d'effectuer un nettoyage régulier de ces systèmes de filtration pour maintenir leur fonctionnement optimal.

Ce processus de nettoyage va alors dépendre du système de filtration.

Les systèmes intégrant des filtres à chaussettes ou à cartouches sont essentiellement destinés aux petites piscines Dans ces systèmes, le matériau filtrant est amovible et il est retiré régulièrement pour être nettoyé, voir remplacé.

Maintenant, le système le plus largement utilisé est celui dit du « filtre à sable (4) » dont le matériau filtrant permet de retenir toutes les particules trop grosses pour le traverser. A noter que ce filtre peut intégrer aujourd'hui d'autres matériaux que le sable, tels que le verre ou les matériaux de filtration avancé (MFA) tels que la terre de diatomée, ou encore la zéolite. Maintenant, les filtres à sable doivent être régénérés régulièrement pour qu'il ne se colmate pas. Pour cette étape de régénération, on effectue une étape de lavage à contre-courant, on parle également de « contre lavage » ou encore « backwash ». Cette étape consiste à inverser le sens de passage de l'eau dans le filtre (à l'aide d'une vanne multivoies), de sorte à remettre en suspension les particules agglomérées dans le filtre, et à les évacuer (avec cette eau), en général vers les égouts. Dans un filtre à sable de taille standard utilisé pour une piscine domestique, le volume d'eau de lavage à contre-courant typique est d'environ 200 à 600 litres par cycle de lavage en fonction de la taille de la piscine. En outre, et dans des conditions normales, un tel lavage devra être appliqué toutes les 1 à 2 semaines en été et d'une fois par mois en hiver. Le gaspillage cumulé d'eau utilisable, sinon potable, à l'échelle communautaire représente une perte massive de précieuses ressources en eau, en particulier si l'on considère les énormes volumes d'eau utilisés pour laver à contre-courant les piscines communautaires, les piscines et spas domestiques et les installations de refroidissement commerciales et industrielles.

L'avènement de conditions climatiques plus sèches causées par des précipitations moyennes plus faibles et des températures moyennes plus élevées a souligné le besoin de dispositifs, de méthodes et de stratégies pour conserver les ressources en eau dans toutes les catégories de la société, y compris domestique, agricole, industrielle et commerciale.

Par conséquent, il existe un besoin de moyen pratique de réduire les pertes d'eau provenant du lavage à contre-courant du filtre de piscine, tout en améliorant le confinement des produits chimiques et du sel.

Pour répondre à cette problématique différentes solutions ont été développées dans l'art antérieur.

Parmi les solutions développées, certaines reposent sur l'introduction d'un « second » filtre, en plus du filtre à sable, comme décrit dans le brevet FR 3096982, et d'autres reposent sur l'introduction d'une cuve de décantation, telle que décrits dans les brevets US 11,111,683, ES 2 312 257 B1 et FR 3087217 B1.

En lien avec les systèmes intégrant des cuves de décantation, le brevet US 11,111,683 décrit un système de filtration qui comprend au moins une cuve de décantation avec une entrée, une sortie à sa base pour l'élimination des sédiments et des particules et une seconde sortie plus haute que la première pour le recyclage de l'eau. Deux vannes multivoies intègrent ce système avec une première vanne permettant d'effectuer au choix la filtration de l'eau au sein du système de filtration ou le nettoyage du système de filtration par un flux inversé, et une seconde vanne connectée à la sortie la plus haute de la cuve de décantation pour diriger le flux associé vers un réservoir d'eau filtré ou vers d'autres utilisations. La solution développée ES 2 312 257 B1 est similaire à celle du brevet précédent et celle du brevet FR 3087217 B1 s'en approche également avec une cuve de décantation présentant un troisième orifice à sa base relié à une « cassette » pour éliminer les matières décantées.

Si ces systèmes révèlent des avancées, ils n'ont pas été adoptées par le grand public car nécessitant trop d'intendance.

### Sommaire de l'invention :

L'inventeur a mis au point une nouvelle solution de lavage des systèmes de filtration des piscines utilisant un système de recyclage de l'eau qui comprend certes une cuve de décantation, mais dont la structure permet un fonctionnement plus automatisé de sorte à en simplifier la mise en oeuvre.

En conséquence, un premier objet de l'invention porte sur un système de filtration d'eau qui comprend :
1) au moins un filtre à sable (4) ;
2) au moins une cuve de décantation (10) en aval du 1) au moins un filtre à sable (4) ;
3) au moins un circuit d'acheminement d'eau (11) reliant la 2) au moins une cuve de décantation (10) au 1) au moins un filtre à sable (4) ; et
4) au moins une pompe (13) permettant le transfert de l'eau décantée entre la cuve de décantation (10) et le filtre à sable (4) ;
où la 2) au moins cuve de décantation (10) comprend en outre au moins au capteur de niveau d'eau et au moins un microcontrôleur qui sont agencés de sorte que le microcontrôleur :
i) coupe l'alimentation de la 4) au moins une pompe (13) permettant le transfert de l'eau décantée entre la cuve de décantation (10) et le filtre à sable (4) dès lors que le niveau d'eau dans la cuve de décantation (10) a atteint un niveau minimum
   et/ou
ii) allume un témoin lumineux dès lors que le niveau d'eau dans la cuve de décantation (10) a atteint un niveau maximum.

Un deuxième objet de l'invention porte sur une piscine comprenant :
i) un bassin de baignade (1),
ii) au moins un système de filtration d'eau qui comprend 1) au moins un filtre à sable (4),
iii) au moins un circuit d'acheminement (3) d'eau reliant le bassin de baignade (1) au système de filtration d'eau ; et
iv) au moins une pompe (2) permettant le transfert de l'eau entre le bassin de baignade (1) et le système de filtration ;

**Où** le système de filtration est tel que décrit précédemment.

La piscine comprend en outre v) au moins une vanne (8) permettant de diriger l'eau en sortie du 1) au moins filtre à sable (4) vers le iii) au moins un circuit d'acheminement (3) de l'eau vers le i) bassin de baignade (1) suite à sa filtration ou, lors du lavage à contre-courant du 1) au moins un filtre à sable (4) du ii) au moins un système de filtration, vers le 3) au moins un circuit d'acheminement (11) de l'eau reliant la cuve de décantation (10) au 1) au moins un filtre à sable (4).

Un troisième objet de l'invention porte sur un procédé de filtration des eaux d'une piscine telle que définie précédemment comprenant les étapes de :
1) pompage de l'eau d'un bassin de baignade (1) vers au moins un filtre à sable (4) d'un système de filtration à travers un circuit d'acheminement (3);
2) filtration de l'eau au sein dudit filtre à sable (4) ; et
3) pompage de l'eau filtrée, en sortie du filtre à sable (4) vers le bassin de baignade (1) à travers ce même circuit d'acheminement (3);

**Dans lequel** :
i) l'au moins un système de filtration est tel que défini précédemment ; et
ii) le procédé est destiné en outre au recyclage des eaux de lavage à contre-courant du filtre à sable (4) du au moins un système de filtration et comprend en outre les étapes de :
   4) lavage régulier, à contre-courant, du filtre à sable (4) pour éviter son colmatage ;
   5) récupération de cette eau de lavage dans la cuve de décantation (10) du système de filtration ;
   6) décantation de l'eau de lavage au sein de la cuve de décantation (10) ; et
   7) transfert de l'eau claire de la cuve de décantation (10), au terme de la décantation, vers le bassin de baignade (1).

Enfin, un dernier objet de l'invention porte sur une utilisation d'un système de filtration comprenant au moins un filtre à sable (4) tel que défini précédemment pour le recyclage des eaux de lavage à contre-courant d'un filtre à sable (4)

### Description des figures :

Les figures 1 et 2 représentent schématiquement et respectivement les étapes de filtration et le lavage à contre-courant d'un filtre à sable (4) au sein des piscines de l'art antérieur.
Les figures 3, 4 et 5 montrent les cycles de fonctionnement d'une piscine intégrant un système de filtration selon l'invention.
La figure 6 montre deux vues distinctes d'un mode de réalisation préféré d'une cuve de décantation (10) telle qu'utilisée dans un système de filtration selon l'invention.

### Description détaillée de l'invention :

Le terme « bassin de baignade (1) » fait référence à un bassin artificiel, étanche, rempli d'eau, de dimensions variables. Typiquement, un tel bassin de baignade (1) présente des dimensions permettant à un être humain de s'y plonger au moins partiellement. De façon générale, un tel bassin de baignade (1) est de forme rectangulaire ou ronde. Pour ce qui est des formes rectangulaires, il existe globalement trois dimensions qualifiées de standards (8 x 4 m, 10 x 5 m ou 6 x 12 m) et ; pour ce qui est des formes rondes, les diamètres standards sont eux de 3m, 3,5m ou 4,60 m. Un tel bassin de baignade (1) peut être de type enterré préfabriqué ou encore construit. Maintenant, un tel bassin de baignade (1) peut également être de type hors-sol, c'est-à-dire posé à même le sol, et donc sans terrassement particulier, sur un terrain préparé.

On entend par « système de filtration », un système apte à retenir des substances de nature diverse présentes en suspension dans l'eau, ceci afin d'en garantir la qualité et de la maintenir dans un état propre à la baignade.

Le terme « circuit d'acheminement » fait référence à un ensemble de conduites permettant le transfert de l'eau ainsi qu'aux éléments de connexion et de régulation associés, lesquels éléments peuvent être par exemple des pompes, des vannes, des valves, des écumeurs, des buses, etc.

En ce qui concerne le iii) au moins un circuit d'acheminement d'eau (3) reliant le bassin de baignade (1) à ii) l'au moins un système de filtration d'eau, il pourra comprendre a) au moins une première conduite permettant l'acheminement de l'eau depuis le bassin de baignade (1) vers l'au moins un système de filtration et b) une seconde conduite permettant l'acheminement de l'eau filtrée depuis l'au moins un système de filtration vers le bassin de baignade (1). Cette a) première conduite comprend avantageusement, à une de ses extrémités, au moins un récupérateur, on parle plus généralement de « skimmer », apte à récupérer l'eau à la surface du bassin de baignade (1). Cette b) seconde conduite comprend, à une de ses extrémités, au moins une buse apte à refouler l'eau dans le bassin de baignade (1). Typiquement, et pour améliorer la filtration du bassin de baignade (1), on préfèrera avoir plusieurs buses (2 ou 3 généralement).

On entend par « conduite » un élément généralement de section circulaire destiné à l'écoulement d'un fluide, ici l'eau du bassin de baignade (1). Ces conduites peuvent être composées de toutes matières rigides ou flexibles, de préférence de PVC ou de polyéthylène, de diamètre variable, de préférence d'un diamètre choisi parmi les standards de 63 mm, de 50 mm ou de 40 mm et, de manière encore plus préférée, d'un diamètre égal à 50 mm.

La piscine comprend en outre vi) au moins une seconde vanne (7), dite vanne inverseuse, permettant de changer l'acheminement de l'eau, en amont du filtre à sable (4), soit pour effectuer sa filtration au sein du filtre à sable (4), soit pour effectuer un lavage à contre-courant du filtre à sable (4).

De préférence, les vannes (7 et 8) forment une seule et même vanne multivoies.

On entend par « pompe », un dispositif permettant d'aspirer et de refouler l'eau de sorte à provoquer son déplacement dans les circuits d'acheminements. De préférence, cette pompe (2, 13) comprend un ou plusieurs filtres physiques permettant la rétention des matières solides présentes au sein de l'eau qui pourraient l'endommager ou perturber son fonctionnement.

En lien avec iv) l'au moins une pompe (2) permettant le transfert de l'eau entre le bassin de baignade (1) et le système de filtration, celle-ci est positionnée de préférence en amont du ii) au moins système de filtration. De la sorte, cette iv) au moins une pompe (2) permet d'améliorer l'alimentation en eau du système de filtration.

Cette iv) au moins une pompe (2) permet une circulation de l'eau dans le circuit d'acheminement (3) à un débit de 3 à 15 m³/h, de préférence de 5 à 12 m³/h et, de manière encore plus préférée, de 8 à 10 m³/h.

On entend par « filtre à sable (4) », un dispositif bien connu de l'homme du métier comprend un matériau filtrant particulaire non soluble (5) tel que le sable, le verre ou les matériaux de filtration avancé (MFA) tels que la terre de diatomée ou la zéolite. De façon générale, le matériau filtrant (5) de ce filtre à sable (4) prend la forme de particules dont le diamètre est typiquement entre 0,1 et 5 mm, de préférence entre 0,4 et 1,2 mm.

La taille du filtre à sable (4) dépendra du volume du bassin de baignade (1). Typiquement, ledit au moins un filtre à sable (4) permet d'accueillir un volume compris entre 10 et 300 kg de sable, de préférence entre 50 et 200 kg de sable.

Par « cuve de décantation », on fait référence à un récipient capable de retenir les eaux de lavage du filtre à sable (4). Une telle cuve de décantation (10) comprend au moins une entrée (12) et au moins une sortie (14). De préférence, ladite au moins une sortie (14) est située dans la partie basse de la cuve de décantation (10). Une telle cuve de décantation (10) pourra prendre toute forme adaptée à sa fonction (cylindrique, rectangulaire, etc.). Typiquement, une telle cuve de décantation (10) présentera un volume compris entre 20 et 1 000 litres, de préférence entre 200 et 800 litres.

Une telle cuve de décantation (10) est fabriquée en tout matériau à même de lui conférer une étanchéité satisfaisante pour permettre l'éviction de fuite. A titre d'exemple, une telle cuve de décantation peut être fabriquée en matière plastique (ex : PE, PP ou PVC), métallique (ex : inox) ou encore en béton imperméabilisé.

De préférence, ladite cuve de décantation (10) est réalisée en matière plastique.

Une telle cuve de décantation (10) peut également comprendre des éléments de renforts (17) de sorte à maintenir l'intégrité de sa structure. De tels éléments de renfort (17) peuvent être réalisés en tout matériaux adaptés (bois, métal, etc.).

Typiquement, le 3) au moins un circuit d'acheminement d'eau (11) de 2) l'au moins une cuve de décantation (10) au 1) au moins un filtre à sable (4) comprendra :
a) une première conduite permettant l'acheminement de l'eau de lavage du 1) au moins un filtre à sable (4) vers l'au moins une entrée (12) de 2) la cuve de décantation (10) ; et
b) une seconde conduite permettant l'acheminement de l'eau décantée depuis la au moins une sortie (14) de la 2) cuve de décantation (10) vers le 1) au moins un filtre à sable (4). De préférence, cette b) seconde conduite permettant l'acheminement de l'eau décantée depuis la 2) cuve de décantation (10) vers le 1) au moins un filtre à sable (4) comprend au moins un clapet anti-retour (15).

En lien avec 4) l'au moins une pompe (13) permettant le transfert de l'eau décantée entre la cuve de décantation (10)et le filtre à sable (4), celle-ci est positionnée de préférence en amont du ii) au moins système de filtration.

Selon un mode de réalisation, la 4) au moins une pompe (13) permettant le transfert de l'eau décantée entre la cuve de décantation (10) et le filtre à sable (4) et la iv) l'au moins une pompe (2) permettant le transfert de l'eau entre le bassin de baignade (1) et le système de filtration correspondent à une seule et unique pompe.

Selon un mode de réalisation distinct, la 4) au moins une pompe (13) permettant le transfert de l'eau décantée entre la cuve de décantation (10) et le filtre à sable (4) et la iv) l'au moins une pompe (13) permettant le transfert de l'eau entre le bassin de baignade (1) et le système de filtration correspondent à deux pompes distinctes.

Avantageusement, cette 4) au moins une pompe (13) permet une circulation de l'eau dans le circuit d'acheminement (11) a un débit inférieur à 1 m³/h de préférence entre 50 et 200 litres/heure.

Selon un mode de réalisation préféré, la au moins une sortie de la cuve de décantation (14) est connectée, au sein de ladite cuve de décantation et via un tube souple (20 ; ex : une durite), à un flotteur (21) de sorte à permettre le vidage prioritairement des eaux de surface de la cuve de décantation (10). De préférence, ledit flotteur (21) comprend en outre un filtre, prenant par exemple la forme d'une crépine, et qui permet la filtration des eaux de surface évacuées par cette au moins une sortie (14).

Selon un autre mode de réalisation préféré, le ii) au moins un système de filtration comprend en outre au moins un microcontrôleur qui est agencé de sorte d'activer la 4) au moins une pompe (13) permettant le transfert de l'eau décantée entre la cuve de décantation (10) et le filtre à sable (4) après un décompte de temps réalisé par le microcontrôleur qui permet aux particules (6) présentes au sein de la cuve de décantation (10) d'être sédimentées.

Typiquement, le décompte de temps réalisé par le microcontrôleur permettant aux particules (6) présentes au sein de la cuve de décantation (10) d'être sédimentées est d'au moins 2 jours, de préférence ce décompte de temps est de 4 jours.

Selon encore un autre mode de réalisation préféré, la 2) au moins une cuve de décantation (10) comprend en outre au moins au capteur de niveau d'eau (18,19) et au moins un microcontrôleur qui sont agencés de sorte que le microcontrôleur coupe l'alimentation de la iv) l'au moins une pompe (2) permettant le transfert de l'eau entre le bassin de baignade (1) et le système de filtration dès lors que le niveau d'eau dans la cuve de décantation (10) a atteint un niveau maximum.

Les capteurs de niveau d'eau (18,19) sont bien connus de l'homme du métier et peuvent prendre la forme de capteurs de niveau ultrasoniques, de capteurs de niveau capacitifs, de capteurs de niveau hydrostatiques ou encore de capteurs de niveau à flotteur.

Selon un autre mode de réalisation, la 2) au moins une cuve de décantation (10) comprend en outre au moins au capteur de turbidité et au moins un microcontrôleur qui sont agencés de sorte que le microcontrôleur active la iv) l'au moins une pompe (2) permettant le transfert de l'eau entre le bassin de baignade (1) et le système de filtration, dès lors que les particules (6) présentes au sein de la cuve de décantation (10) ont sédimentées.

Selon un mode de réalisation préféré, la 2) au moins une cuve de décantation (10) comprend au moins une seconde sortie (16) et le ii) au moins un système de filtration comprend en outre 5) au moins un circuit d'acheminement d'eau (9) qui relie ladite au moins une seconde sortie (16) de la 2) cuve de décantation (10) à une voie d'évacuation, de sorte à permettre un délestage ou un vidage, complet ou partiel, de la 2) cuve de décantation (10).

De préférence, ladite au moins une seconde sortie (16) est située dans la partie basse de la cuve de décantation (10) et, de manière particulièrement préférée, dans la base de la 2) cuve de décantation (10).

Avantageusement, un système de fermeture, comme une vanne ou un bouchon, est associé à cette au moins une seconde sortie (16) de la cuve de décantation (10), de sorte à commander son ouverture pour permettre l'élimination des particules (6) décantées présentes dans la cuve de décantation (10).

Outre le système de filtration et la piscine, la présente invention a encore pour objet un procédé de filtration des eaux d'une piscine telle que définie précédemment comprenant les étapes de :
1) pompage de l'eau d'un bassin de baignade (1) vers au moins un filtre à sable (4) d'un système de filtration à travers un circuit d'acheminement (3);
2) filtration de l'eau au sein dudit filtre à sable (4) ; et
3) pompage de l'eau filtrée, en sortie du filtre à sable (4) vers le bassin de baignade (1) à travers ce même circuit d'acheminement (3);

**Dans lequel :**
i) le système de filtration est tel que défini précédemment ; et
ii) le procédé est destiné en outre au recyclage des eaux de lavage à contre-courant du filtre à sable (4) du au moins un système de filtration et comprend en outre les étapes de :
   4) lavage régulier, à contre-courant, du filtre à sable (4) du système de filtration pour éviter son colmatage ;
   5) récupération de cette eau de lavage dans la cuve de décantation (10) du système de filtration ;
   6) décantation de l'eau de lavage au sein de la cuve de décantation (10) ; et
   7) transfert de l'eau claire de la cuve de décantation (10), au terme de la décantation, vers le bassin de baignade (1).

Selon un mode de réalisation préféré, le procédé selon l'invention comprend en outre une étape complémentaire 8) d'évacuation des boues de décantation de la cuve de décantation. Une telle étape d'évacuation peut être faite soit manuellement, soit à l'aide d'une sortie (16) vers une voie d'évacuation (9).

Enfin, un dernier objet de l'invention porte sur une utilisation d'un système de filtration comprenant au moins un filtre à sable (4) tel que défini précédemment pour le recyclage des eaux de lavage à contre-courant du filtre à sable (4).

Les exemples qui suivent sont fournis à titre d'illustration et ne sauraient limiter la portée de la présente invention.

### Exemples :

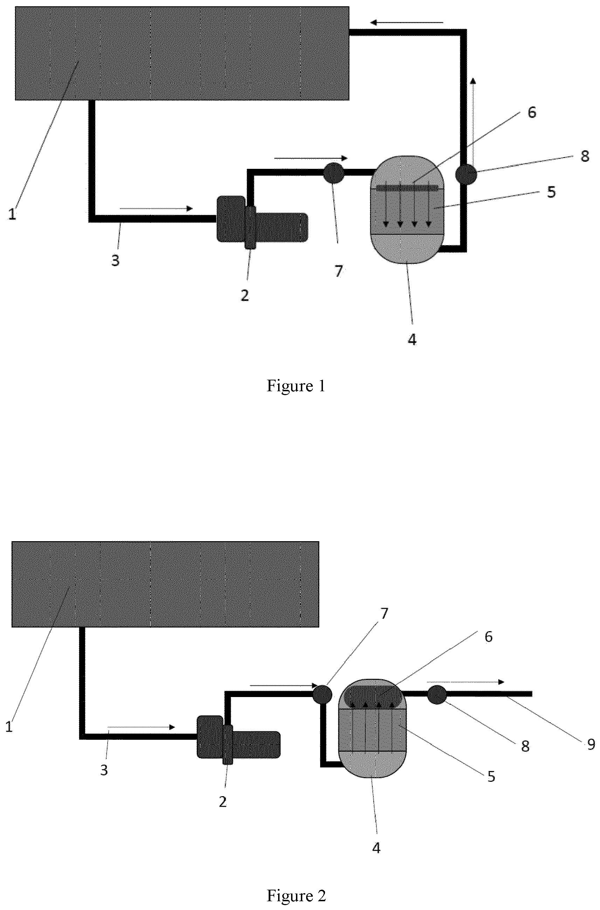

Les figures 1 et 2 montrent les cycles de fonctionnement d'une piscine classique intégrant un filtre à sable (4).

Sur ces figures, l'eau du bassin de baignade (1) est entraînée par une pompe (2) dans un circuit d'acheminement (3) vers un filtre à sable (4). Cette eau traverse le filtre à sable (4) pour retourner au bassin de baignade (1). Maintenant, les particules (6) présentes au sein de cette eau sont retenues par le matériau filtrant (5) (par exemple du sable) du filtre à sable (4). Pour effectuer un lavage à contre-courant du filtre à sable (4), les vannes (7, 8) sont réglées de sorte à permettre cette fois le lavage à contre-courant du filtre à sable (4). Dans le cadre de ce lavage à contre-courant, l'eau du bassin de baignade (1) est entrainée par la pompe (2) dans le circuit d'acheminement (3) vers un filtre à sable (4) de sorte à entraîner les particules (6) retenues par le matériau filtrant (5) vers une voie d'évacuation (9), comme les égouts.

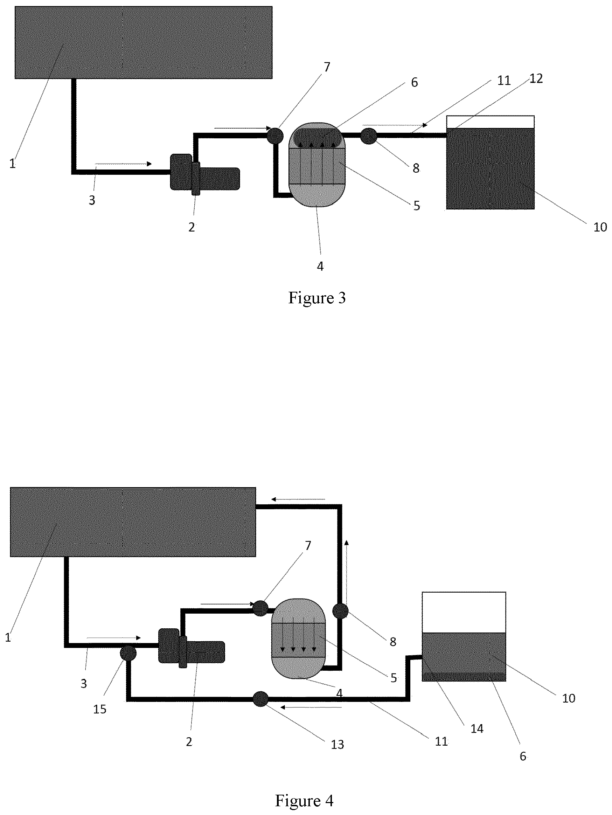

Les figures 3 à 5 montrent les cycles de fonctionnement d'une piscine intégrant un système de filtration selon l'invention.

De même que pour les piscines classiques, les vannes (7, 8) sont réglées de sorte à permettre le lavage à contre-courant du filtre à sable (4). Maintenant, et dans le cadre de ce lavage à contre-courant illustré à la figure 3, l'eau du bassin de baignade (1) est entrainée par la pompe (2) dans le circuit d'acheminement (3) vers un filtre à sable (4) de sorte à entraîner les particules (6) retenues par le matériau filtrant (5) vers un circuit d'acheminement (11) jusqu'à une cuve de décantation (10) via une entrée (12).

Une fois les particules (6) sédimentées au sein de la cuve de décantation (10) et comme illustré à la figure 4, l'eau claire peut être entrainée par une pompe (13) et depuis la sortie (14) de la cuve de décantation (10) dans le circuit d'acheminement (11) jusqu'au filtre à sable (4) (4) avant d'être réinjectée dans le bassin de baignade (1) (1). Un clapet anti-retour (15) empêche l'eau présente au sein du circuit d'acheminement (3) d'aller vers la cuve de décantation (10).

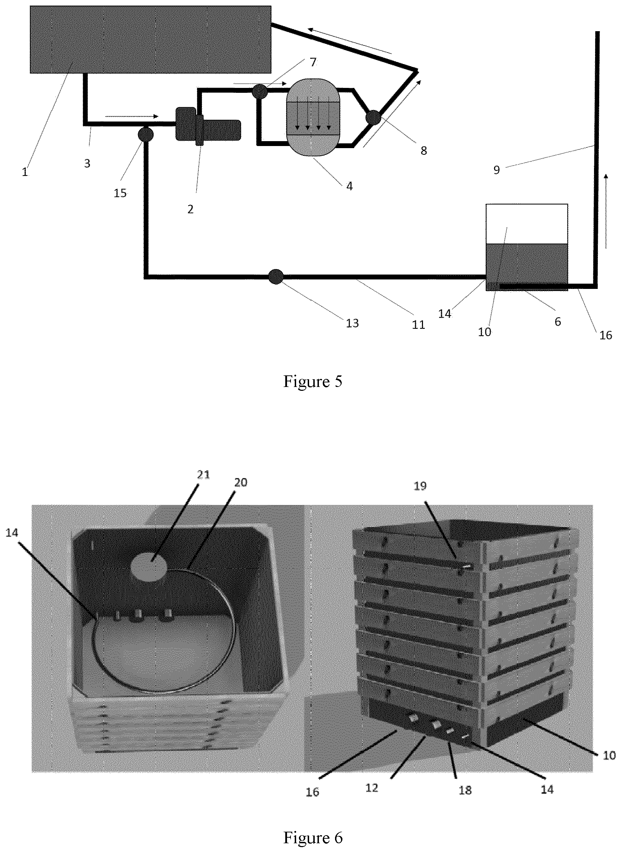

De façon régulière et comme illustré à la figure 5, la cuve de décantation (10) peut être nettoyée en évacuant les particules (6) sédimentées par une sortie (16) vers une voie d'évacuation (9), comme les égouts.

La figure 6 montre deux vues distinctes d'un mode de réalisation préféré d'une cuve de décantation telle qu'utilisée dans un système de filtration selon l'invention.

Dans ce mode de réalisation préféré, la cuve de décantation (10) est réalisée en matière plastique et intègre des éléments de renfort (17) en bois. La cuve de décantation intègre un capteur de niveau bas (18) et un capteur de niveau haut (19) permettant de renseigner le système de filtration sur le niveau de remplissage de la cuve de décantation (10).

Dans sa partie basse, elle intègre la cuve de décantation (10) intègre une entrée (12) connectée au filtre à sable (4), une sortie (14) permettant de réinjecter l'eau claire vers le bassin de baignade (1) et une sortie (16) permettant l'évacuation des boues de décantation. La sortie (14) est connectée via un tube (20) à un flotteur (21) éventuellement associé à une crépine, laquelle connexion permet d'évacuer les eaux de surface de la cuve de décantation (10).

## Revendications

1. Un système de filtration d'eau qui comprend :
1) au moins un filtre à sable (4) ;
2) au moins une cuve de décantation (10) en aval du 1) au moins un filtre à sable (4) ;
3) au moins un circuit d'acheminement d'eau (11) reliant la 2) au moins une cuve de décantation (10) au 1) au moins un filtre à sable (4) ; et
4) au moins une pompe (13) permettant le transfert de l'eau décantée entre la cuve de décantation (10) et le filtre à sable (4) ;
**caractérisé en ce que** la 2) au moins une cuve de décantation (10) comprend en outre au moins au capteur de niveau d'eau et au moins un microcontrôleur qui sont agencés de sorte que le microcontrôleur :
i) coupe l'alimentation de la 4) au moins une pompe (13) permettant le transfert de l'eau décantée entre la cuve de décantation (10) et le filtre à sable (4) dès lors que le niveau d'eau dans la cuve de décantation (10) a atteint un niveau minimum ;
et/ou
ii) allume un témoin lumineux dès lors que le niveau d'eau dans la cuve de décantation (10) a atteint un niveau maximum.

2. Le système de filtration selon la revendication 1, **caractérisé en ce que** la 2) au moins une cuve de décantation (10) comprend au moins une entrée (12) et au moins une sortie (14), laquelle au moins une sortie (14) de la cuve de décantation (10) est connectée, au sein de ladite cuve de décantation et via un tube (20) souple à un flotteur (21) de sorte à permettre le vidage prioritairement des eaux de surface de la cuve de décantation (10).

3. Le système de filtration selon l'une quelconque des revendications précédentes, **caractérisé en ce que** le ii) au moins un système de filtration comprend en outre au moins un microcontrôleur qui est agencé de sorte d'activer la 4) au moins une pompe (13) permettant le transfert de l'eau décantée entre la cuve de décantation (10) et le filtre à sable (4) après un décompte de temps réalisé par le microcontrôleur qui permet aux particules (6) présentes au sein de la cuve de décantation (10) d'être sédimentées

4. Le système de filtration selon l'une quelconque des revendications précédentes, **caractérisé en ce que** la 2) au moins une cuve de décantation (10) comprend en outre au moins au capteur de niveau d'eau et au moins un microcontrôleur qui sont agencés de sorte que le microcontrôleur coupe l'alimentation de la iv) l'au moins une pompe (2) permettant le transfert de l'eau entre le bassin de baignade (1) et le système de filtration dès lors que le niveau d'eau dans la cuve de décantation (10) a atteint un niveau maximum.

5. Le système de filtration selon l'une quelconque des revendications précédentes, **caractérisé en ce que** le au moins un filtre à sable (4) comprend un matériau filtrant (5) particulaire non soluble tel que le sable, le verre ou les matériaux de filtration avancé (MFA) tels que la terre de diatomée ou la zéolite.

6. Le système de filtration selon l'une quelconque des revendications précédentes, **caractérisé en ce que** la 2) au moins une cuve de décantation (10) comprend au moins une seconde sortie (16) et **en ce qu'**il comprend en outre 5) au moins un circuit d'acheminement d'eau qui relie ladite au moins une seconde sortie (16) de la 2) cuve de décantation (10) à une voie d'évacuation (9), telle que les égouts, de sorte à permettre un délestage ou un vidage elle de la 2) cuve de décantation (10).

7. Le système de filtration selon la revendication 3, **caractérisé en ce que** le 3) au moins un circuit d'acheminement d'eau (11) de 2) l'au moins une cuve de décantation (10) au 1) au moins un filtre à sable (4) comprend :
a) une première conduite permettant l'acheminement de l'eau de lavage du 1) au moins un filtre à sable (4) vers l'au moins une entrée (12) de 2) la cuve de décantation (10) ; et
b) une seconde conduite permettant l'acheminement de l'eau décantée depuis la au moins une sortie (14) de la 2) cuve de décantation vers le 1) au moins un filtre à sable (4), laquelle b) seconde conduite comprend au moins un clapet anti-retour (15).

8. Une piscine comprenant
i) un bassin de baignade (1) ;
ii) au moins un système de filtration qui comprend :
1) au moins un filtre à sable (4) ;
2) au moins une cuve de décantation (10) en aval du 1) au moins un filtre à sable (4) ;
3) au moins un circuit d'acheminement d'eau (11) reliant la 2) au moins une cuve de décantation (10) au 1) au moins un filtre à sable (4) ; et
4) au moins une pompe (13) permettant le transfert de l'eau décantée entre la cuve de décantation (10) et le filtre à sable (4);
iii) au moins un circuit d'acheminement d'eau (3) reliant le bassin de baignade (1) au système de filtration d'eau ;
iv) au moins une pompe (2) permettant le transfert de l'eau entre le bassin de baignade (1) et le système de filtration ; et
v) au moins une vanne (8) permettant de diriger l'eau en sortie du 1) au moins filtre à sable (4) vers le iii) au moins un circuit d'acheminement de l'eau (3) vers le i) bassin de baignade (1) suite à sa filtration ou, lors du lavage à contre-courant du 1) au moins un filtre à sable (4) du ii) au moins un système de filtration, vers le 3) au moins un circuit d'acheminement de l'eau (11) reliant la cuve de décantation (10) au 1) au moins un filtre à sable (4) ;
**caractérisée en ce que** l'au moins un système de filtration est tel que défini à l'une quelconque des revendications 1 à 7.

9. Un procédé de filtration des eaux d'une piscine selon la revendication 8 destiné en outre au recyclage des eaux de lavage à contre-courant du filtre à sable (4) du au moins un système de filtration comprenant les étapes de :
1) pompage de l'eau d'un bassin de baignade (1) vers au moins un filtre à sable (4) d'au moins un système de filtration à travers un circuit d'acheminement (3);
2) filtration de l'eau au sein du filtre à sable (4);
3) pompage de l'eau filtrée, en sortie du filtre à sable (4) vers le bassin de baignade (1) à travers ce même circuit d'acheminement (3);
4) lavage régulier, à contre-courant, du filtre à sable (4) pour éviter son colmatage ;
5) récupération de cette eau de lavage dans une cuve de décantation (10) du système de filtration ;
6) décantation de l'eau de lavage au sein de la cuve de décantation (10); et
7) transfert de l'eau claire de la cuve de décantation (10), au terme de la décantation, vers le bassin de baignade (1) ;
**caractérisé en ce que** l'au moins un système de filtration est tel que défini à l'une quelconque des revendications 1 à 7.

10. Une utilisation d'un système de filtration comprenant au moins un filtre à sable (4) pour le recyclage des eaux de lavage à contre-courant du filtre à sable (4) **caractérisé en ce que le** système de filtration est tel que défini à l'une quelconque des revendications 1 à 7.
